(19) Europäisches Patentamt
European Patent Office
Office européen des brevets

(11) EP 3 613 781 A1

(12) **EUROPEAN PATENT APPLICATION**
published in accordance with Art. 153(4) EPC

(43) Date of publication:
**26.02.2020 Bulletin 2020/09**

(21) Application number: **18787772.5**

(22) Date of filing: **04.04.2018**

(51) Int Cl.:
***C08F 212/34*** *(2006.01)* ***C08F 222/40*** *(2006.01)*
***C08L 61/06*** *(2006.01)*

(86) International application number:
**PCT/JP2018/014458**

(87) International publication number:
**WO 2018/193852 (25.10.2018 Gazette 2018/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.04.2017 JP 2017082707**

(71) Applicant: **Showa Denko K.K.**
**Tokyo 105-8518 (JP)**

(72) Inventors:
- **HASEGAWA, Aoi**
  **Tokyo 105-8518 (JP)**
- **MORI, Masatoshi**
  **Tokyo 105-8518 (JP)**
- **ISHIBASHI, Yoshitaka**
  **Tokyo 105-8518 (JP)**

(74) Representative: **Strehl Schübel-Hopf & Partner**
**Maximilianstrasse 54**
**80538 München (DE)**

(54) **CURABLE RESIN COMPOSITION, CURED PRODUCT THEREOF, AND STRUCTURE INCLUDING CURED PRODUCT THEREOF**

(57) A curable resin composition, which has excellent flowability and reactivity at the time of molding, with which a highly reliable cured product which has excellent heat resistance can be obtained by curing is provided.

A curable resin composition comprising a polyalkenyl phenol compound (A) and a polymaleimide compound (B), wherein the polyalkenyl phenol compound (A) is a compound containing at least two structural units represented by the following formula (1):

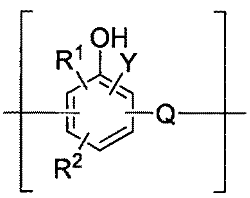
(1)

where $R^1$ and $R^2$ each independently represent a hydrogen atom, a $C_{1-10}$ alkyl group, a $C_{1-2}$ alkoxy group, or a hydroxy group, Q represents a $C_{5-10}$ cycloalkylene group or a divalent organic group containing an alicyclic fused ring, and Y is an alkenyl group.

EP 3 613 781 A1

## Description

FIELD

The present invention relates to a curable resin composition, a cured product thereof, and a structure comprising the cured product thereof.

BACKGROUND

In recent years, in order to achieve higher quality electronic devices having greater functionality and higher speed, it is necessary to further increase the density, reduce the size, and reduce the thickness of semiconductor packages used in electronic devices. In particular, high-density integration of electronic devices and further high-density mounting are progressing along with the demand for greater functionality, etc., of electronic devices, and thus, miniaturization and increased density of semiconductor packages compatible with high-density mounting are accelerating. Along with the high-density integration of semiconductor packages, high heat resistance is required of the semiconductor package encapsulation materials. Additionally, it is important to restrain excessive increases in costs. Wire bond-type and flip chip-type BGAs (Ball Grid Arrays) are used as semiconductor packages.

Transfer molding, which is a typical encapsulation molding method in semiconductor package manufacturing processes, is known as a molding method which is suitable for high-productivity miniaturization and micro fabrication. Transfer molding is a method in which a material is heat-softened in a plunger, the heat-softened material is then pressed into a heated mold cavity through a flow passage in the mold, such as a gate, sprue, and runner, and thereafter the material is cured within the mold cavity. Since the material is injected into the cavity in a highly fluid state, low-pressure forming is possible. Thus, transfer molding is characterized in that inserts are less likely to be damaged as compared with other molding methods which requiring high pressure, and transfer molding is preferably used for the seal-molding of semiconductors and ICs.

Material flowability is important in transfer molding. If the flowability is not properly designed for the package shape, molding defects such as unfilled portions in the mold cavity and voids and cracks in the molded product are likely to occur.

In light of these points, epoxy resins have conventionally been used for transfer molding. Since epoxy resins have high processability, they can be applied to the encapsulation of semiconductor packages of various shapes. However, since epoxy resins have low heat resistance, generally, continuous use for long periods of time in a temperature range of 200 °C or more is difficult. There is an attempt to improve the heat resistance of epoxy resins by introducing a skeleton such as a naphthalene skeleton or a tetraphenyl skeleton into the epoxy resin. However, since these structures are special structures, they are expensive and their practical applications are limited. Furthermore, since epoxy compounds having high heat resistance performance (glass transition temperature) have low fluidity in some cases, problems regarding poor processability at the time of molding may occur.

Compositions comprising an alkenyl phenol compound and a maleimide compound as thermosetting resins having a high heat resistance are known (for example, Patent Literature 1 (Japanese Unexamined Patent Publication (Kokai) No. 2016-74902) and Patent Literature 2 (Japanese Unexamined Patent Publication (Kokai) No. 7-165825)). By radically polymerizing the alkenyl group of the alkenyl phenol compound and the unsaturated group of the maleimide compound with each other to bridge highly, a cured product (glass transition temperature: 200 to 350 °C) having a heat resistance higher than that of epoxy resins is obtained.

[CITATION LIST]

[PATENT LITERATURE]

[PTL 1] Japanese Unexamined Patent Publication (Kokai) No. 2016-74902
[PTL 2] Japanese Unexamined Patent Publication (Kokai) No. 7-165825

SUMMARY

[TECHNICAL PROBLEM]

However, there is a problem in that compositions containing the above alkenyl phenol compound and a maleimide compound do not have sufficiently high processability due to high viscosity at the time of molding and low flowability

as compared to epoxy resins. Furthermore, there is a problem in that since the aforementioned compositions have lower reactivity at the time of molding as compared with the epoxy resins, the time required until molded products thereof are demolded is long, whereby productivity is insufficient. Thus, provision of new curable resin compositions with which a cured product which has suitable moldability and which can be used continuously for long periods of time in temperature range of 200 °C or higher can be obtained is significant.

In light of the above, the present invention aims to provide a curable resin composition, which has excellent flowability and reactivity during molding, with which a highly reliable cured product which has excellent heat resistance can be obtained by curing.

[SOLUTION TO PROBLEM]

As a result of rigorous investigation, the present inventors have discovered that a composition containing an alkenylated (in which an alkenyl group is bonded to the aromatic ring) polyphenol compound containing a specific basic skeleton and a polymaleimide compound can provide a curable resin composition, which has excellent flowability and reactivity at the time of molding, with which a cured resin product which has excellent heat resistance can be obtained by curing. In other words, the present invention includes the following aspects.

[1] A curable resin composition comprising a polyalkenyl phenol compound (A) and a polymaleimide compound (B), wherein the polyalkenyl phenol compound (A) is a compound containing at least two structural units represented by the following formula (1):

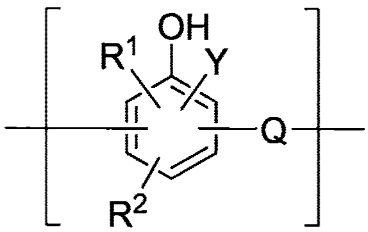

(1)

where $R^1$ and $R^2$ each independently represent a hydrogen atom, a $C_{1-10}$ alkyl group, a $C_{1-2}$ alkoxy group, or a hydroxy group, Q represents a $C_{5-10}$ cycloalkylene group or a divalent organic group containing an alicyclic fused ring, and Y is an alkenyl group represented by the following formula (2):

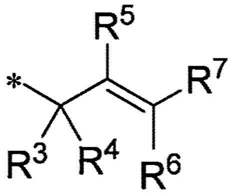

(2)

where $R^3$, $R^4$, $R^5$, $R^6$, and $R^7$ each independently represent a hydrogen atom, a $C_{1-5}$ alkyl group, a $C_{5-10}$ cycloalkyl group, or a $C_{6-12}$ aryl group, and * represents the bonding portion with the aromatic ring.

[2] The curable resin composition according to [1], wherein Q in formula (1) is a divalent organic group containing an alicyclic fused ring.

[3] The curable resin composition according to [2], wherein Q in formula (1) is a dicyclopentadienylene group.

[4] The curable resin composition according to any one of [1] to [3], wherein $R_1$ and $R_2$ in formula (1) are hydrogen atoms.

[5] The curable resin composition according to any one of [1] to [4], wherein the degree of polymerization of the polyalkenyl phenol compound (A), as determined from the molecular weight distribution measured by GPC, is 2 to 20.

[6] The curable resin composition according to any one of [1] to [5], wherein the polyalkenyl phenol compound (A) is included in an amount of 5 to 200 parts by mass relative to 100 parts by mass of the polymaleimide compound (B).

[7] The curable resin composition according to any one of [1] to [6], further comprising a polyalkenyl phenol compound (C) containing a structural unit represented by the following formula (3):

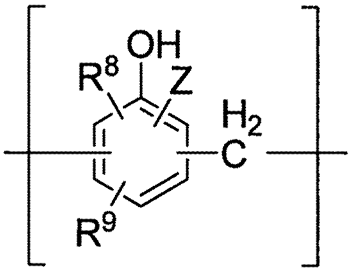

(3)

where $R^8$ and $R^9$ each independently represent a hydrogen atom, a $C_{1-10}$ alkyl group, a $C_{1-2}$ alkoxy group, or a hydroxy group, and Z is an alkenyl group represented by the following formula (4):

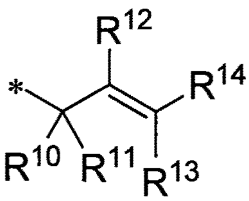

(4)

where $R^{10}$, $R^{11}$, $R^{12}$, $R^{13}$, and $R^{14}$ each independently represent a hydrogen atom, a $C_{1-5}$ alkyl group, a $C_{5-10}$ cycloalkyl group, or a $C_{6-12}$ aryl group, and * represents the bonding portion with the aromatic ring.

[8] The curable resin composition according to [7], wherein the polyalkenylphenol compound (A) and the polyalkenyl phenol compound (C) are included in a total amount of 10 to 200 parts by mass relative to 100 parts by mass of the polymaleimide compound (B).

[9] The curable resin composition according to [7] or [8], wherein the polyalkenyl phenol compound (C) is included in an amount of 5 to 2000 parts by mass relative to 100 parts by mass of the polyalkenyl phenol compound (A).

[10] The curable resin composition according to any one of [1] to [9], wherein the polymaleimide compound (B) is an aromatic polymaleimide compound.

[11] The curable resin composition according to [10], wherein the polymaleimide compound (B) is at least one compound selected from bis(4-maleimidophenyl)methane and 2,2-bis[4-(4-maleimidophenyloxy)phenyl]propane.

[12] The curable resin composition according to any one of [1] to [11], further comprising a curing accelerator (D) in an amount of 0.01 to 10 parts by mass relative to a total of 100 parts by mass of the polyalkenyl phenol compound (A), the polymaleimide compound (B), and the polyalkenyl phenol compound (C) (when present).

[13] The curable resin composition according to any one of [1] to [12], further comprising a filler (E).

[14] A cured product of the curable resin composition according to any one of [1] to [13].

[15] A structure comprising a cured product of the curable resin composition according to any one of [1] to [13].

[ADVANTAGEOUS EFFECTS OF INVENTION]

The present invention can provide a curable resin composition, which has excellent flowability and reactivity at the time of molding, with which a highly reliable cured product which has excellent heat resistance can be obtained by curing.

DESCRIPTION OF EMBODIMENTS

The present invention will be described in detail below. The curable resin composition of the present invention comprises a polyalkenyl phenol compound (A) and a polymaleimide compound (B) as indispensable components.

[Polyalkenyl Phenol Compound (A)]

The polyalkenyl phenol compound (A) is a compound which includes at least two structural units represented by formula (1) below and which can be obtained by Claisen rearrangement of, for example, a poly-2-alkenyl aromatic ether compound.

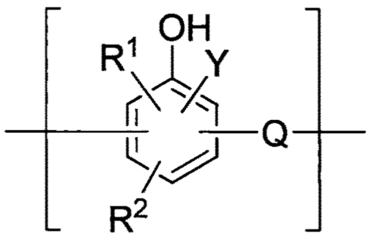

(1)

In formula (1), $R^1$ and $R^2$ each independently represent a hydrogen atom, a $C_{1-10}$ alkyl group, a $C_{1-2}$ alkoxy group, or a hydroxy group, Q represents a $C_{5-10}$ cycloalkylene group or a divalent organic group containing an alicyclic fused ring, and Y is an alkenyl group represented by the following formula (2):

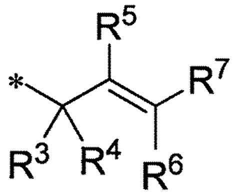

(2)

where $R^3$, $R^4$, $R^5$, $R^6$, and $R^7$ each independently represent a hydrogen atom, a $C_{1-5}$ alkyl group, a $C_{5-10}$ cycloalkyl group, or a $C_{6-12}$ aryl group, and * represents the bonding portion with the aromatic ring.

"Each independently" means that a plurality of $R^1$ contained in the compound may be the same or may be different. The same is true for substituents $R^2$ to $R^7$, divalent group Q, and substituents such as compound (C) described below.

Specific examples of the $C_{1-10}$ alkyl group constituting $R^1$ and $R^2$ in formula (1) include methyl groups, ethyl groups, n-propyl groups, isopropyl groups, n-butyl groups, sec-butyl groups, t-butyl groups, n-pentyl groups, n-hexyl groups, octyl groups, nonyl groups, and decyl groups. Specific examples of the $C_{1-2}$ alkoxy group include methoxy groups and ethoxy groups.

In some cases, $R^1$ and $R^2$ in formula (1) are preferably both hydrogen atoms from the viewpoint of low steric hindrance and excellent reaction rate.

Specific examples of the $C_{5-10}$ cycloalkylene group constituting Q in formula (1) include cyclopentylene groups, cyclohexylene groups, methylcyclohexylene groups, and cycloheptylene groups. It is preferable that the carbon number of the divalent organic group containing an alicyclic fused ring be 6 to 10. The divalent organic group containing an alicyclic fused ring is preferably a divalent organic group containing an alicyclic fused ring on the main chain. A dicyclopentadienylene group is a specific example of a $C_{6-10}$ divalent organic group containing an alicyclic fused ring.

It is particularly preferable that Q be a divalent organic group containing an alicyclic fused ring. Among these, a dicyclopentadienylene group is more preferable from the viewpoint of excellent flowability and reactivity at the time of molding and excellent dielectric properties of the obtained cured product. An encapsulation material with which a cured product which has a lower dielectric constant and dissipation factor is obtained is advantageous because less power is consumed.

Specific examples of the $C_{1-5}$ alkyl groups constituting $R^3$, $R^4$, $R^5$, $R^6$, and $R^7$ in formula (2) include methyl groups, ethyl groups, n-propyl groups, isopropyl groups, n-butyl groups, sec-butyl groups, t-butyl groups, and n-pentyl groups. Specific examples of $C_{5-10}$ cycloalkyl groups include cyclopentyl groups, cyclohexyl groups, methylcyclohexyl groups, and cycloheptyl groups. Specific examples of $C_{6-12}$ aryl groups include phenyl groups, methylphenyl groups, ethylphenyl groups, biphenyl groups, and naphthyl groups. Among these, $R^3$, $R^4$, $R^5$, $R^6$, and $R^7$ are all preferably hydrogen atoms, i.e., the alkyenyl group represented by formula (2) is preferably an allyl group.

The polyalkenyl phenol compound (A) may be a mixture of compounds having different numbers of structural units. In the present embodiment, the average value (degree of polymerization) per molecule of the total number of structural units represented by formula (1) is preferably 2 to 20, more preferably 2 to 15, and further preferably 2 to 10. When the average value per molecule of the total number of structural units is 2 or more, the heat resistance of the cured product, which is the ultimate desired object, obtained by using the polyalkenyl phenol compound as a curing agent is more favorable, and when the average value is 20 or less, fluidity at the time of molding is more favorable.

When the number average molecular weight calculated by GPC is Mn and the molecular weight of the repeating structure of the polyalkenyl phenol compound is M, the degree of polymerization P is determined from the following formula:

$$P = Mn / M$$

The number average molecular weight of the polyalkenyl phenol compound (A) is preferably 300 to 5000, more preferably 400 to 4000, and further preferably 500 to 3000. As long as the number average molecular weight is 300 or more, when the cured product of the curable resin composition is placed in a high temperature environment, the thermal decomposition starting temperature is more suitable, and as long as the number average molecular weight is 5000 or less, the viscosity of the curable resin composition is within a more preferable range for processing at the time of molding.
The polyalkenyl phenol compound (A) can be obtained by rearrangement of the 2-alkenyl group to the ortho position or para position by Claisen rearrangement after carrying out alkenyl etherification on a part of the hydroxy groups of a phenolic resin as a raw material. Thus, in an embodiment of the present invention, Y, which is the alkenyl group represented by formula (2), is bonded to the ortho- or para-position carbon atom of the aromatic ring with respect to the phenolic hydroxy group. It is preferable that a known phenolic resin containing structural units represented by formula (5) below be used as the raw material phenolic resin.

[Formula 7]

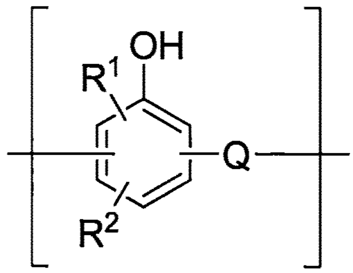

(5)

where $R^1$, $R^2$, and Q are the same as the $R^1$, $R^2$, and Q of formula (1).
Phenol-dicyclopentadiene copolymer resins are specific examples of the raw material phenolic resin of the polyalkenyl phenol compound (A).
The 2-alkenyl etherification of the raw material phenolic resin can be carried out by exemplary two methods, (i) a known method in which a halogenated 2-alkenyl compound such as allyl chloride, methallyl chloride, and allyl bromide is reacted with a phenol compound, and (ii) a known method in which a 2-alkenyl carboxylic acid compound such as allyl acetate is reacted with a phenol compound. The method described in, for example, Japanese Unexamined Patent Publication (Kokai) No. 2-91113 can be used as the 2-alkenyl etherification reaction in which a halogenated 2-alkenyl compound is used. The method described in, for example, Japanese Unexamined Patent Publication (Kokai) No. 2011-26253 can be used as the method in which a 2-alkenyl carboxylic acid compound is reacted with a phenolic resin.
The amount of the halogenated 2-alkenyl compound or 2-alkenyl carboxylic acid compound used is preferably 0.4 to 5.0 equiv, and more preferably 0.6 to 4.0 equiv relative to the phenolic hydroxy group. When the amount used is 0.4 equiv or more, the amount of reaction sites with the polymaleimide compound (B) after Claisen rearrangement is more favorable, and a cured product having excellent heat resistance can be obtained. The 2-alkenyl etherification reaction can be carried out by mixing the 2-alkenyl compound with the raw material phenolic resin, and reacting for 4 to 40 hours. In the 2-alkenyl etherification reaction, a solvent can be used to dissolve the raw material phenolic resin. The reaction can also be carried out without the use of a solvent by using a 2-alkenyl carboxylic acid compound capable of dissolving the raw material phenolic resin. The 2-alkenyl etherification rate of the raw material phenolic resin can be controlled by suppressing the reaction rate (conversion rate) of the of the 2-alkenyl compound by using a halogenated 2-alkenyl compound or a 2-alkenyl carboxylic acid compound in an amount greater than the abovementioned amount of the halogenated 2-alkenyl compound or the 2-alkenyl carboxylic acid compound used, and by adjusting the reaction time to a short reaction time.
The target polyalkenyl phenol compound (A) can be obtained by carrying out Claisen rearrangement on the polyalkenyl ether compound produced by the method described in (i) or (ii) above. Claisen rearrangement can be performed by heating the polyalkenyl ether compound to a temperature in the range of 100 to 250 °C, and reacting for 1 to 20 hours. Claisen rearrangement may be carried out using a high boiling point solvent or can be carried out without a solvent. Inorganic salts such as sodium thiosulfate and sodium carbonate can also be added to accelerate the rearrangement reaction. The details are disclosed in Japanese Unexamined Patent Publication (Kokai) No. 2-91113.

[Polymaleimide Compound (B)]

The polymaleimide compound (B) is a compound containing two or more maleimide groups represented by formula (6):

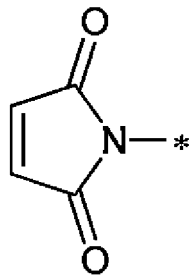

(6)

where * represents the bonding portion with the aromatic ring or an organic group containing a linear, branched, or cyclic aliphatic hydrocarbon group.

Examples of the polymaleimide compound (B) include bis-maleimides such as bis(4-maleimidophenyl)methane, tris-maleimides such as tris(4-maleimidophenyl)methane, tetrakis-maleimides such as bis(3,4-dimaleimidophenyl)methane, and polymaleimides such as poly(4-maleimide styrene). The polymaleimide compound (B) includes an aromatic polymaleimide compound and an aliphatic polymaleimide compound. From the viewpoint of a particularly excellent flame retardancy of the obtained cured product, an aromatic polymaleimide compound is preferable. The aromatic polymaleimide compound is a compound containing two or more maleimide groups represented by formula (6), and these maleimide groups may be bonded to the same or different aromatic rings. Specific examples of the aromatic ring include single rings such as benzene and fused rings such as naphthalene and anthracene. It is preferable that the polymaleimide compound (B) be an aromatic bis-maleimide compound or an aliphatic bis-maleimide compound because they mix well in the curable resin composition. Specific examples of the aromatic bis-maleimide compound include bis(4-maleimidophenyl)methane, bis(3-maleimidophenyl)methane, bis(3 -methyl-4-maleimidophenyl)methane, bis(3,5 -dimethyl-4-maleimidophenyl)methane, bis(3-ethyl-4-maleimidophenyl)methane, bis(3,5-diethyl-4-maleimidophenyl)methane, bis(3-propyl-4-maleimidophenyl)methane, bis(3,5-dipropyl-4-maleimidophenyl)methane, bis(3 -butyl-4-maleimidophenyl)methane, bis(3,5 -dibutyl-4-maleimidophenyl)methane, bis(3-ethyl-4-maleimido-5-methylphenyl)methane, 2,2-bis(4-maleimidophenyl)propane, 2,2-bis[4-(4-maleimidophenyloxy)phenyl]propane, bis(4-maleimidophenyl)ether, bis(3-maleimidophenyl)ether, bis(4-maleimidophenyl)ketone, bis(3-maleimidophenyl)ketone, bis(4-maleimidophenyl)sulfone, bis(3-maleimidophenyl)sulfone, bis[4-(4-maleimidophenyloxy)phenyl]sulfone, bis(4-maleimidophenyl)sulfide, bis(3-maleimidophenyl)sulfide, bis(4-maleimidophenyl)sulfoxide, bis(3-maleimidophenyl)sulfoxide, 1,4-bis(4-maleimidophenyl)cyclohexane, 1,4-dimaleimidonaphthalene, 2,3-dimaleimidonaphthalene, 1,5-dimaleimidonaphthalene, 1,8-dimaleimidonaphthalene, 2,6-dimaleimidonaphthalene, 2,7-dimaleimidonaphthalene, 4,4'-dimaleimidobiphenyl, 3,3'-dimaleimidobiphenyl, 3,4'-dimaleimidobiphenyl, 2,5-dimaleimide-1,3-xylene, 2,7-dimaleimidofluorene, 9,9-bis(4-maleimidophenyl)fluorene, 9,9-bis(4-maleimido-3-methylphenyl)fluorene, 9,9-bis(3-ethyl-4-maleimidophenyl)fluorene, 3,7-dimaleimido-2-methoxyfluorene, 9,10-dimaleimidophenanthrene, 1,2-dimaleimidoanthraquinone, 1,5-dimaleimidoanthraquinone, 2,6-dimaleimidoanthraquinone, 1,2-dimaleimidobenzene, 1,3-dimaleimidobenzene, 1,4-dimaleimidobenzene, 1,4-bis(4-maleimidophenyl)benzene, 2-methyl-1,4-dimaleimidobenzene, 2,3-dimethyl-1,4-dimaleimidobenzene, 2,5-dimethyl-1,4-dimaleimidobenzene, 2,6-dimethyl-1,4-dimaleimidobenzene, 4-ethyl-1,3-dimaleimidobenzene, 5-ethyl-1,3-dimaleimidobenzene, 4,6-dimethyl-1,3-dimaleimidobenzene, 2,4,6-trimethyl-1,3-dimaleimidobenzene, 2,3,5,6-tetramethyl-1,4-dimaleimidobenzene, and 4-methyl-1,3-dimaleimidobenzene. Specific examples of the aliphatic bis-maleimide compound include bis(4-maleimidocyclohexyl)methane and bis(3-maleimidocyclohexyl)methane. Among these, bis(4-maleimidophenyl)methane and 2,2-bis[4-(4-maleimidophenyloxy)phenyl]propane are preferable. Examples of commercially available products include the BMI (trade name, manufactured by Daiwa Kasei Kogyo Co., Ltd.) series.

The mixing amount of the polyalkenyl phenol compound (A) is preferably 5 to 200 parts by mass, more preferably 10 to 150 parts by mass, and further preferably 20 to 130 parts by mass when the mixing amount of the polymaleimide compound (B) is 100 parts by mass. As long as the above mixing amount is 5 parts by mass or more, the fluidity/liquidity at the time of shaping/molding is more favorable. Additionally, as long as the above mixing amount is 200 parts by mass or less, the heat resistance of cured product is more favorable.

[Polyalkenyl Phenol Compound (C)]

The curable resin composition may further contain a polyalkenyl phenol compound (C). In an embodiment, the curable resin composition contains the polyalkenyl phenol compound (C). By using the polyalkenyl phenol compound

(C) with the polyalkenyl phenol compound (A), the fluidity of the curable resin composition at the time of molding and the heat resistance of the cured product can be further enhanced.

The polyalkenyl phenol compound (C) is a compound which contains a structural unit represented by formula (3) below and which can be obtained by the Claisen rearrangement of, for example, a poly-2-alkenyl aromatic ether compound. In certain embodiments, the polyalkenyl phenol compound (C) contains at least two structural units represented by formula (3).

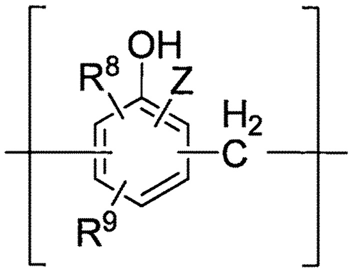 (3)

where $R^8$ and $R^9$ in formula (3) each independently represent a hydrogen atom, a $C_{1-10}$ alkyl group, a $C_{1-2}$ alkoxy group, or a hydroxy group, and Z is an alkenyl group represented by formula (4) below:

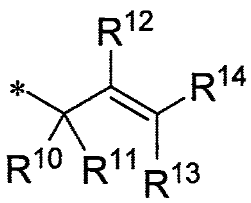 (4)

where $R^{10}$, $R^1$, $R^{12}$, $R^{13}$, and $R^{14}$ each independently represents a hydrogen atom, a $C_{1-5}$ alkyl group, a $C_{5-10}$ cycloalkyl group, or a $C_{6-12}$ aryl group, and * represents the bonding portion with the aromatic ring.

Specific examples of the $C_{1-10}$ alkyl group and $C_{1-2}$ alkoxy group constituting $R^8$ and $R^9$ of formula (3) are the same as those described regarding $R^1$ and $R^2$ in formula (1). Specific examples of the $C_{1-5}$ alkyl group, $C_{5-10}$ cycloalkyl group, and $C_{6-12}$ aryl group constituting $R^{10}$ to $R^{14}$ of Z of formula (3) represented by formula (4) are the same as those described regarding Y of formula (1).

The total mixing amount of the polyalkenyl phenol compound (A) and the polyalkenyl phenol compound (C) is preferably 10 to 200 parts by mass, more preferably 30 to 180 parts by mass, and further preferably 50 to 150 parts by mass when the mixing amount of the polymaleimide compound (B) is 100 parts by mass. As long as the above mixing amount is 10 parts by mass or greater, fluidity at the time of molding is more favorable. Additionally, as long as the above mixing amount is 200 parts by mass or less, the heat resistance of the cured product is more favorable.

The mixing amount of the polyalkenyl phenol compound (C) is preferably 5 to 2000 parts by mass, more preferably 15 to 1000 parts by mass, and further preferably 20 to 500 parts by mass when the mixing amount of the polyalkenyl phenol compound (A) is 100 parts by mass. As long as the above mixing amount is 5 parts by mass or more, the heat resistance of the cured product is more favorable. Additionally, as long as the above mixing amount is 2000 parts by mass or less, the fluidity at the time of molding is more favorable.

The total content of the polyalkenyl phenol compound (A), the polyalkenyl phenol compound (C), and the polymaleimide compound (B) in the curable resin composition can be, for example, 5% by mass or more, 10% by mass or more, or 20% by mass or more, and can be 100% by mass or less, 95% by mass or less, or 90% by mass or less. In semiconductor encapsulation applications, the above total content is preferably 5 to 50% by mass, more preferably 7 to 45% by mass, and further preferably 10 to 30% by mass.

Like the polyalkenyl phenol compound (A), the polyalkenyl phenol compound (C) can be obtained by the rearrangement of the 2-alkenyl group to the ortho position or para position by Claisen rearrangement after carrying out alkenyl etherification on a part of the hydroxy groups of a phenolic resin as a raw material. Thus, in an embodiment of the present invention, Z, which is the alkenyl group represented by formula (4), is bonded to the carbon atom at the ortho position or para position, to phenolic hydroxy group, of the aromatic ring. It is preferable that a known phenolic resin containing a structural unit represented by formula (7) below be used as the raw material phenol:

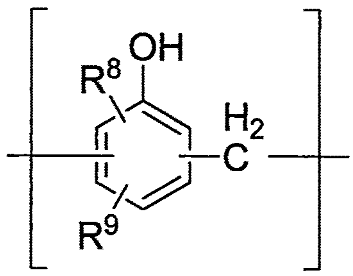

(7)

where $R^8$ and $R^9$ are the same as $R^8$ and $R^9$ of formula (3).

Specific examples of the raw material phenolic resin of polyalkenyl phenol compound (C) include phenolic novolak resins and cresol novolak resins.

[Additives]

Various additives can be mixed into the curable resin composition as long as they do not interfer with the curing properties thereof.

Examples of the additives include a curing accelerator (D) and a filler (E).

[Curing Accelerator (D)]

By mixing the curing accelerator (D) into the curable resin composition, the curing of the curable resin composition can be accelerated. Examples of the curing accelerator (D) include radical initiators such as photo radical initiators and thermal radical initiators. The curing accelerator is preferably a thermal radical initiator. Examples of more preferable thermal radial initiators include organic peroxides. Among organic peroxides, organic peroxides having a ten-hour half-life temperature in the range of 100 to 170 °C are further preferable, and specific examples thereof include dicumyl peroxide, 2,5-dimethyl-2,5-di(tert-butylperoxy)hexane, tert-butylcumyl peroxide, di-tert-butyl peroxide, 1,1,3,3-tetramethylbutyl hydroperoxide, and cumene hydroperoxide. The amount of curing accelerator (D) used is preferably 0.01 to 10 parts by mass, more preferably 0.05 to 7.5 parts by mass, and further preferably 0.1 to 5 parts by mass relative to a total 100 parts by mass of the polyalkenyl phenol compound (A), the polymaleimide compound (B), and the polyalkenyl phenol compound (C) (when present). As long as the amount of curing accelerator (D) used is 0.01 parts by mass or greater, the curing reaction proceeds sufficiently, and as long as the amount is 10 parts by mass or less, the storage stability of the curable resin composition is more favorable.

[Filler (E)]

The type of the filler (E) is not particularly limited, and an organic filler such as a silicone powder, and an inorganic filler such as silica and boron nitride can be appropriately used depending on the application.

For example, when the curable resin composition is used in semiconductor encapsulation applications, it is preferable to mix an insulating inorganic filler to obtain a cured product having a low coefficient of thermal expansion. The inorganic filler is not particularly limited and any known inorganic filler can be used. Specific examples of the inorganic filler include particles such as amorphous silica, crystalline silica, alumina, boron nitride, aluminum nitride, and silicon nitride. From the viewpoint of lowering viscosity, spherical amorphous silica is desirable. The inorganic filler may be surface-treated with a silane coupling agent, etc., or may not be surface-treated. The average particle size of the inorganic filler is preferably 0.1 to 30 $\mu$m, and it is more preferable that the maximum particle size be 100 $\mu$m or less, in particular 75 $\mu$m or less. When the average particles size is within this range, the viscosity of the curable resin composition is suitable at the time of use, whereby injectability into narrow pitch wiring or narrow gaps is suitable. This average particle size is the volume cumulative particle size D50 measured with a laser diffraction/scattering particle size distribution measurement device. The content of the inorganic filler of the curable resin composition can be appropriately selected depending on the application. For example, in semiconductor encapsulation applications, the content of the inorganic filler of the curable resin composition is preferably 50 to 95% by mass, more preferably 55 to 93% by mass, and further preferably 70 to 90% by mass.

As other additives, coupling agents, antifoaming agents, coloring agents, fluorescent materials, modifiers, leveling agents, light-diffusing agents, and flame retardants, etc., can be added to the curable resin composition of the present invention. For example, from the viewpoint of improving adhesion, a coupling agent may be added. The coupling agent is not particularly limited, and includes, for example, a silane coupling agent such as vinyltriethoxysilane, vinyltrimethoxysilane, 3-glycidoxypropyltrimethoxysilane, $\gamma$-methacryloxypropyltrimethoxysilane, $\gamma$-aminopropyltrimethoxysi-

lane, and N-phenyl-3-aminopropyltrimethoxysilane. A single coupling agent may be used or two or more types may be used. The compounding amount of the coupling agent in the curable resin composition is preferably 0.1 to 5% by mass. As long as the above compounding amount is 0.1% by mass or greater, the effect of the coupling agent is sufficiently exhibited, and as long as the compounding amount is 5% by mass or less, the melt viscosity thereof and the hygroscopicity and strength of the cured product are more favorable.

The curable resin composition can be a high solid content composition. In some embodiments, the solid content of the curable resin composition can be, for example, greater than 60% by mass, 70% by mass or more, or 80% by mass or more, and can be 100% by mass or less, 95% by mass or less, or 90% by mass or less. In an embodiment, the curable resin composition does not contain a solvent, i.e., the curable resin composition is a solvent-free composition. In this embodiment, the solid content of the curable resin composition can be 90% by mass or more, 92% by mass or more, or 95% by mass or more, and can be 100% by mass or less, 99% by mass or less, or 98% by mass or less.

[Curable Resin Composition Preparation Method]

The method for the preparation of the curable resin composition is not particularly limited as long as the polyalkenyl phenol compound (A), the polymaleimide compound (B), and the other components can be uniformly mixed. A method in which the polyalkenyl phenol compound (A), the polyalkenyl phenol compound (C), when present, and the polymaleimide compound (B) are first mixed, and thereafter additives are added is preferable since each of the materials can be uniformly mixed.

The method for mixing the polyalkenyl phenol compound (A), the polyalkenyl phenol compound (C), when present, and the polymaleimide compound (B) is not particularly limited. Mixing can be carried out by introducing each of the components into a mixer such as a reaction vessel, pot mill, two-roll mill, three-roll mill, rotary mixer, twin-screw mixer, disper, single- or twin-screw (co-directional or opposite-directional) extruder, and kneader at a prescribed mixing ratio, and thereafter stirring or kneading. On a laboratory scale, a rotary mixer is preferable since the stirring conditions thereof can be easily changed, and industrially, a twin-screw mixer is preferable from the viewpoint of productivity. Each mixing machine can be used by appropriately changing the stirring conditions.

Like the above mixing method, the curable resin composition preparation method is not particularly limited. The curable resin composition can be prepared by introducing the polyalkenyl phenol compound (A), the polyalkenyl phenol compound (C), when present, the polymaleimide compound (B), and additives, when present, into a mixer such as a pot mill, two-roll mill, three-roll mill, rotary mixer, twin screw mixer, disper, single or twin screw (co-directional or opposite-directional) extruder, and kneader at a prescribed mixing ratio and mixing. In the case of pulverization of the curable resin composition, the pulverization is not particularly limited as long as the resin does not melt due to the heat generated during processing. For small amounts, the use of an agate mortar is convenient. When using a commercially available pulverizer, it is preferable that the amount of heat generated during pulverization be small in order to prevent the melting of the mixture. The particle size of the powder is preferably about 1 mm or less.

[Structure Production Method]

The curable resin composition can be melted by heating. The structure can be produced by molding the melted curable resin composition into a desired preferable shape, and curing as necessary, and demolding. Transfer molding and compression molding are preferable as the structure production method. In transfer molding, preferred conditions include, in the case of, for example, a molding having a size of 10 mm × 75 mm × 3 mm thickness, a temperature of the top plate and mold in the range of 170 to 190 °C, a retention pressure of 50 to 150 $kg/cm^2$, and a retention time of 1.5 to 5 minutes. Preferred conditions of compressing molding include, in the case of, for example, a mold having a size of 100 mm × 75 mm × 3 mm thickness, a temperature of the top plate and mold in the range of 170 to 190 °C, a molding pressure of 5 to 20 MPa, and a pressurization time of 1.5 to 10 minutes.

[Cured Product Production Method]

The curable resin composition can be cured by heating. The thermal curing conditions are preferably 110 to 300 °C, more preferably 120 to 280 °C, and further preferably 130 to 250 °C. As long as the temperature is 110 °C or more, curing proceeds sufficiently in a more suitable time, and as long as the temperature is 300 °C or less, the components are less deteriorated or volatilized, whereby the safety of the equipment is maintained. The heating time can be appropriately changed in accordance with the curable resin composition and the curing temperature, but is preferably 0.1 to 24 hours from the viewpoint of productivity. The heating may be divided into a plurality of repetitions. When a particularly high degree of curing is desired, it is preferable that the final curing temperature be 250 °C or less, more preferably 230 °C or less by, for example, raising the temperature as the curing progresses, without curing at an excessively high temperature.

[Formability]

Formability can be evaluated by, for example, the spiral flow value and gelation start time of the curable resin composition. When evaluating with the spiral flow value, fluidity can be measured in accordance with the Japan Electrical Insulating and Advanced Performance Materials Industrial Association standard EIMS T901. For example, a transfer molding machine (manufactured by Matsuda Seisakusho Co., Ltd.) can be used in the measurement. When the spiral flow value is measured after heating a top plate and a test mold having an engraved spiral groove to 180 °C, and retaining about 30 g of the curable resin composition at a pressure of 100 $kg/cm^2$ for a duration of three minutes using a transfer molding machine, a value of 110 to 170 cm indicates suitable processability. The spiral flow value is preferably 110 to 160 cm, and further preferably 110 to 140 cm. When evaluating reactivity by the gelation start time, the gelation start time can be obtained by placing about 1 g of the curable resin composition on a hot plate which has been heated to 180 °C, continuously kneading until adhesion to the spatula disappears such that the flexible resin composition can be pressed slowly with the spatula, and measuring the time from when the curable resin composition was placed on the hot plate until the composition is gelled and does not stick to the spatula. A gelation start time of 20 to 40 seconds indicates suitable reactivity.

[Heat Resistance]

The heat resistance can be evaluated from, for example, the value of the glass transition temperature (Tg) of the cured product of the curable resin composition. Tg is measured by thermo-mechanical analysis (TMA). For example, a TMA/SS6100 thermo-mechanical analyzer manufactured by SII Nanotechnology, Inc., can be used. When measurement is performed using a 5 mm × 5 mm × 5 mm sample at a temperature in the range of 30 to 300 °C, a temperature increase rate of 5 °C/min, and a load of 20.0 mN the temperature of the displacement point of the linear expansion coefficient is Tg. The heat resistance is suitable at 250 °C or higher of Tg.

[Cured Product Applications]

The cured product of the curable resin composition of the present invention can be used in applications such as semiconductor encapsulation materials, prepregs, interlayer insulation resins, solder resists, and die attachments.

EXAMPLES

The present invention will be specifically described below based on the Examples and Comparative Examples. However, the present invention is not limited to these Examples.

The analysis methods and characteristics evaluation methods used in the Examples and Comparative Examples are as described below.

[Characteristics Evaluation Methods]

• Molecular Weight

The GPC measurement conditions are as described below.

| | |
|---|---|
| Device Name: | JASCO LC-2000 plus (manufactured by JASCO Corporation) |
| Column: | Shodex™ LF-804 (manufactured by Showa Denko Corporation) |
| Mobile Phase: | Tetrahydrofuran |
| Flow Rate: | 1.0 mL/min |
| Detector: | JASCO RI-2031 plus (manufactured by JASCO Corporation) |
| Temperature: | 40 °C |

The number average molecular weight Mn and the weight average molecular weight Mw are detected under the above measurement conditions using a calibration curve generated using a polystyrene reference material.

• Degree of Polymerization

The degree of polymerization P is determined with the following formula:

$$P = Mn / M$$

where Mn is the number average molecular weight detected by GPC and M is the molecular weight of the structural units of the polyalkenyl phenol compound.

• Gelation Start Time

About 1 g of the curable resin composition is placed on a hot plate which has been heated to 180 °C, continuously kneaded until adhesion to the spatula disappears such that the flexible resin composition can be pressed slowly with the spatula, and the time from when the curable resin composition was placed on the hot plate until the composition is gelled and does not stick to the spatula is measured as the gelation start time (seconds). The results are shown in Table 1.

• Spiral Flow

Spiral flow is measured in accordance with the Japan Electrical Insulating and Advanced Performance Materials Industrial Association standard EIMS T901. The spiral flow is measured after heating a top plate and a test mold having an engraved spiral groove to 180 °C, and retaining about 30 g of the curable resin composition at a pressure of 100 $kg/cm^2$ for a duration of three minutes using a transfer molding machine (manufactured by Matsuda Seisakusho Co., Ltd.). The results are shown in Table 1.

• Shore D Hardness

Shore D Hardness measurement samples are prepared using a powder curable resin composition by molding with a transfer molding machine at a mold temperature of 180 °C, a retention pressure of 100 $kg/cm^2$, and a retention time of two minutes. The Shore D Hardnesses of the samples (35 mm × 35 mm × 5 mm) are measured using a Shore D Hardness tester (manufactured by Teclock Co., Ltd.). The results are shown in Table 1.

• Glass Transition Temperature (Tg)

Glass transition temperature measurement samples are prepared using a powder curable resin composition by molding with a transfer molding machine at a mold temperature of 180 °C, a retention pressure of 100 $kg/cm^2$, and a retention time of three minutes. After heating at 230 °C for six hours and curing, the samples are measured by thermo-mechanical analysis (TMA). Measurement of a 5 mm × 5 mm × 5 mm sample is performed using a TMA/SS6100 thermo-mechanical analyzer manufactured by SII Nanotechnology Co., Ltd., in a temperature range of 30 to 300 °C at a temperature increase rate of 5 °C/min and a load of 20.0 mN, and the temperature of the displacement point of the linear expansion coefficient is set as the Tg. The results are shown in Table 1.

• Permittivity and Dissipation Factor

Permittivity and dissipation factor are determined by a complex permittivity measurement by perturbation method using cavity resonator. Permittivity and dissipation factor measurement samples are prepared using a powder curable resin composition by molding with a transfer molding machine at a mold temperature of 180 °C, a retention pressure of 100 $kg/cm^2$, and a retention time of three minutes. After heating at 230 °C for six hours and curing, the samples are measured. The permittivity and dissipation factor values are determined by measuring using 1.5 mm × 1.5 mm × 70.0 mm samples at room temperature and a measurement frequency of 5 GHz with an 8753ES S-parameter vector network analyzer manufactured by Keysight Technologies, Inc., and a 5 GHz cavity resonator CP19 with a CPMA-V3 cavity perturbation program. The results are shown in Table 1.

[Synthesis of Dicyclopentadiene-type Phenol Compound (Synthesized in Accordance with Japanese Unexamined Patent Publication (Kokai) No. 63-99224)]

150 g (1.59 mol) of phenol (manufactured by Junsei Chemical Co., Ltd.) was charged into a 1000 mL tri-neck flask having a reflux condenser, and after adding 2.25 g (15.9 mmol) of a boron trifluoride diethyl ether complex (manufactured by Tokyo Chemical Industry Co., Ltd.) while maintaining a temperature of 100 °C, 105 g (0.797 mol) of dicyclopentadiene (manufactured by Wako Pure Chemical Industries, Ltd.) was added dropwise over 1.5 hours. After dropwise addition, the temperature was maintained at 100 °C for 3 hours, allowed to cool, and the polymer was dissolved

in 150 g of methyl ethyl ketone (manufactured by Junsei Chemical Co., Ltd.). 100 g of a 2% aqueous solution of sodium hydroxide was added to the polymer solution and shaking extraction was performed twice. Thereafter, the organic layer was washed three times with 150 g of pure water, and after the third washing, it was confirmed that the pH of the separated aqueous layer was 7.0. The separated organic layer was concentrated under reduced pressure to remove the methyl ethyl ketone and excess phenol, whereby 184 g (0.797 mol) of a brown solid dicyclopentadiene-type phenol compound (hydroxy group: 231 equiv, number average molecular weight Mn: 670, weight average molecular weight Mw: 1300) was obtained. The yield at this stage was 100%.

[Production of Polyalkenyl Phenol Compounds]

• Polyallyl Phenol Compound A1

In formula (1), $R^1$ and $R^2$ = hydrogen atom, and Q = dicyclopentadienylene group, and in formula (2), $R^3$ to $R^7$ = hydrogen atom.

A compound A1, which is allylated at the ortho position or the para position to phenolic hydroxy group (hydroxy group: 266 equiv, number average molecular weight Mn: 800, weight average molecular weight Mw: 1350, degree of polymerization: 3.0) was produced by the following method using the prepared dicyclopentadiene-type phenol compound. A solution in which 201 g (1.45 mol) of potassium carbonate (manufactured by Nippon Soda Co., Ltd.) has been dissolved in 150 g of pure water, and 150.0 g (hydroxy group: 0.65 mol) of the dicyclopentadiene-type phenol compound were charged into a 1000 mL tri-neck flask, and thereafter the vessel was purged with nitrogen gas and heated to 85 °C. Under a nitrogen gas flow, 204 g (2.04 mol) of allyl acetate (manufactured by Showa Denko, Co., Ltd.), 3.82 g (14.6 mmol) of triphenylphosphine (manufactured by Hokko Chemical Industry Co., Ltd.), and 0.62 g (0.291 mmol) of 50 mass% water-containing 5 mass%-Pd/C-STD type (manufactured by NE Chem Cat Co., Ltd.) were charged into the vessel, and after raising the temperature to 105 °C and reacting in a nitrogen gas atmosphere for four hours, 29 g (0.291 mol) of allyl acetate was further added thereto, and heating was continued for ten hours. Thereafter, stirring was stopped, and the mixture was allowed to stand and separate into an organic layer and an aqueous layer. Thereafter, pure water (200 g) was added until the precipitated salt (potassium acetate) dissolved, and 200 g of toluene was added while maintaining the temperature at 80 °C or higher to confirm that a white precipitate (potassium acetate) had not precipitated. The Pd/C was recovered by filtration (1 micrometer membrane filter (pressure (0.3 MPa) using an Advantech KST-142-JA). The filter cake was washed with 100 g of toluene and the aqueous layer was separated. The combined product of the toluene, which was used for washing the filter cake and the organic layer was washed three times with 200 g of pure water, and after the third washing, it was confirmed that the pH of the separated aqueous layer was 7.0. 4.5 g of activated carbon CN1 (manufactured by Nihon Norit Co., Ltd.) was added to the separated organic layer, and the mixture was heated to 60 °C and stirred at 300 rpm with a magnetic stirrer for 1 hour. The activated carbon was then removed by filtration (pressurization (0.3 MPa) using a 1-micron membrane filter (ADSTEK KST-142-JA)), and the mixture was concentrated under reduced pressure to remove the toluene and excess allyl acetate, whereby a brown oily dicyclopentadiene-type polyallyl ether compound (number average molecular weight Mn: 800, weight average molecular weight Mw: 1350) was obtained. The yield at this stage was 95%. 200 g of the obtained dicyclopentadiene-type polyallyl ether compound and 200 g of phenol ($C_6H_5OH$, manufactured by Junsei Chemical Co., Ltd., boiling point 182 °C) were charged into a 1000 mL separable flask. Nitrogen gas was pumped into the reaction vessel, the temperature was raised to 170 °C while stirring at 300 rpm with a mechanical stirrer, and the Claisen rearrangement reaction was carried out for seven hours in a nitrogen gas atmosphere. Thereafter, the phenol was removed at 160 °C under reduced pressure, whereby the target reddish-brown dicyclopentadiene-type polyallyl phenol compound A1 was obtained. The yield was 95%.

• Polyallyl Phenol Compound C1

In formula (3), $R^8$ and $R^9$ = hydrogen atom, and in formula (4), $R^{10}$ to $R^{14}$ = hydrogen atom.

A resin, which is allylated at the ortho position or the para position to phenolic hydroxy group (hydroxy group: 154 equiv, number average molecular weight Mn: 1000, weight average molecular weight Mw: 3000, degree of polymerization: 6.6) was produced using a 1:1 mixture of phenol novolak resins Shonol™ BRG-556 and BRG-558 (Showa Denko, Co., Ltd.). Regarding the production method, refer to Example 3 of Japanese Unexamined Patent Publication (Kokai.) No. 2016-28129.

• Polyallyl Phenol Compound X

In formula (1), $R^1$ and $R^2$ = hydrogen atom, the group corresponding to Q was a (2-hyroxy-3-allylphenyl)methylene group, and in formula (2), $R^3$ to $R^7$ = hydrogen atom.

A resin, which is allylated at the ortho position or the para position to phenolic hydroxy group (hydroxy group:

168 equiv, number average molecular weight Mn: 600, weight average molecular weight Mw: 800, degree of polymerization: 3.5) was produced by the following method using a triphenylmethane-type phenolic resin Shonol™ TRI-002 (manufactured by Showa Denko, Co., Ltd.). The triphenylmethane-type polyallyl phenol compound X (number average molecular weight Mn: 600, weight average molecular weight Mw: 800, degree of polymerization: 3.5) was obtained by the same process as the production method of polyallyl phenol compound A1 described above except that 150.0 g (hydroxy group: 1.5 mol) of the triphenylmethane-type phenolic resin Shonol™ TRI-002 (manufactured by Showa Denko, Co., Ltd., number average molecular weight Mn: 400, weight average molecular weight Mw: 500) was used in place of the 150.0 g of the dicyclopentadiene-type phenol resin (E-100, manufactured by JX Energy Corporation). The yield was 92%.

[Raw Materials]

The raw materials other than the polyalkenyl phenol compounds used in the Examples and Comparative Examples are as described below:

- Aromatic bis-maleimide compound: BMI-4000 (2,2-bis[4-(4-maleimidophenyloxy)phenyl]propane, melting point: 165 °C, Daiwa Kasei Kogyo Co., Ltd.)
- Curing accelerator: Percumyl™ D (dicumyl peroxide, NOF Corporation)
- Silica filler: MSR2212 (spherical silica, average particle size 25.5 μm, Tatsumori Co., Ltd., treated with 0.5% by mass silane coupling agent KBM-403 (Shin-Etsu Chemical Co., Ltd.))

[Production of Curable Resin Composition]

• Example 1

100 parts by mass of BMI-4000 was added to a reaction vessel, heated to 170 °C, and stirred. When all of the BMI-4000 had melted and become a clear liquid, the temperature was lowered to 150 °C. 50 parts by mass of polyallyl phenol compound C1, which was heated and melted at 80 °C, and 50 pars by mass of polyallyl phenol compound A1 were added to the reaction vessel, and the three compounds were mixed by heating and stirring at 150 °C for 10 minutes. Blending was performed using the obtained mixture and each of the components shown in Table 1 below at the proportions shown in the table 1, and thereafter melt-kneading (110 °C, 10 minutes with a double-roller (eight-inch roller diameter) manufactured by Toyo Seiki) was carried out. Next, the mixture was allowed to cool at room temperature (25 °C) for one hour and solidify, and was subsequently ground using a mil mixer (Osaka Chemical Co., Ltd., model WB-1, 25 °C, 30 seconds), whereby the target powder curable resin composition was obtained.

• Example 2

A curable resin composition was obtained by the same procedure as in Example 1 except that the mass of the polyallyl phenol compound A1 of Example 1 was changed to 20 parts by mass, and the mass of the polyallyl phenol compound C1 was changed to 80 parts by mass.

• Comparative Example 1

A curable resin composition was obtained by the same procedure as in Example 1 except that 100 parts by mass of the polyallyl phenol compound C1 was used in place of 50 parts by mass of the polyallyl phenol compound A1 and 50 parts by mass of the polyallyl phenol compound C1 of Example 1.

• Comparative Example 2

A curable resin composition was obtained by the same procedure as in Example 1 except that the polyallyl phenol resin X was used in place of the polyallyl phenol compound A1 of Example 1.

| | | | Example 1 | Example 2 | Comp Ex 1 | Comp Ex 2 |
|---|---|---|---|---|---|---|
| Blending Quantity (parts by mass) | Polyallyl Phenol Compound | A1 | 50 | 20 | | |
| | | C1 | 50 | 80 | 100 | 50 |
| | | X | | | | 50 |
| | Aromatic Bis-Maleimide Compound | | 100 | 100 | 100 | 100 |
| | Curing Accelerator | | 0.65 | 0.65 | 0.65 | 0.65 |
| | Silica Filler | | 800 | 800 | 800 | 800 |
| Results | Gelation Start Time | (sec) | 27 | 26 | 21 | 44 |
| | Spiral Flow | (cm) | 116 | 111 | 104 | 156 |
| | Shore D Hardness | | 87 | 88 | 90 | 54 |
| | Glass Transition Temperature | °C | 290 | 288 | 281 | 294 |
| | Permittivity | | 3.3 | 3.3 | 3.4 | 3.5 |
| | Dissipation Factor | | 0.0040 | 0.0045 | 0.0053 | 0.0054 |

Table 1 shows that Examples 1 and 2 had high heat resistance, high fluidity, and excellent fast-curing. Further, Examples 1 and 2 also had good dielectric properties. Conversely, though Comparative Example 1 was excellent in heat resistance and fast-curing properties, the fluidity thereof was poor. Further, it was confirmed that Comparative Example 2 cured very slowly, which adversely affects productivity.

INDUSTRIAL APPLICABILITY

According to the present invention, it is possible to provide a curable resin composition which is excellent in processability and reactivity, and highly heat-resistant electronic components can be obtained using the curable resin composition. In particular, when used in a semiconductor encapsulation material for power devices, an encapsulation material which is excellent in processability and fast-curing at the time of molding, and which has a high flame retardancy and can be used at high frequencies with low los as a cured product after molding, can be obtained.

## Claims

1. A curable resin composition comprising a polyalkenyl phenol compound (A) and a polymaleimide compound (B), wherein the polyalkenyl phenol compound (A) is a compound containing at least two structural units represented by the following formula (1):

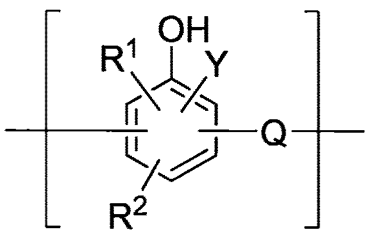

(1)

where $R^1$ and $R^2$ each independently represent a hydrogen atom, a $C_{1-10}$ alkyl group, a $C_{1-2}$ alkoxy group, or a hydroxy group, Q represents a $C_{5-10}$ cycloalkylene group or a divalent organic group containing an alicyclic fused ring, and Y is an alkenyl group represented by the following formula (2):

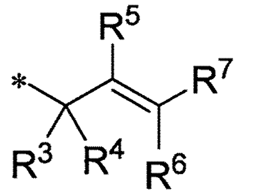

(2)

where $R^3$, $R^4$, $R^5$, $R^6$, and $R^7$ each independently represent a hydrogen atom, a $C_{1-5}$ alkyl group, a $C_{5-10}$ cycloalkyl group, or a $C_{6-12}$ aryl group, and * represents the bonding portion with the aromatic ring.

**2.** The curable resin composition according to claim 1, wherein Q in formula (1) is a divalent organic group containing an alicyclic fused ring.

**3.** The curable resin composition according to claim 2, wherein Q in formula (1) is a dicyclopentadienylene group.

**4.** The curable resin composition according to any one of claims 1 to 3, wherein $R_1$ and $R_2$ in formula (1) are hydrogen atoms.

**5.** The curable resin composition according to any one of claims 1 to 4, wherein the degree of polymerization of the polyalkenyl phenol compound (A), as determined from the molecular weight distribution measured by GPC, is 2 to 20.

**6.** The curable resin composition according to any one of claims 1 to 5, wherein the polyalkenyl phenol compound (A) is included in an amount of 5 to 200 parts by mass relative to 100 parts by mass of the polymaleimide compound (B).

**7.** The curable resin composition according to any one of claims 1 to 6, further comprising a polyalkenyl phenol compound (C) containing a structural unit represented by the following formula (3):

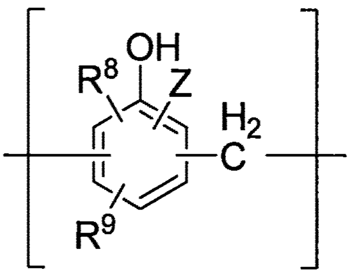

(3)

where $R^8$ and $R^9$ each independently represent a hydrogen atom, a $C_{1-10}$ alkyl group, a $C_{1-2}$ alkoxy group, or a hydroxy group, and Z is an alkenyl group represented by the following formula (4):

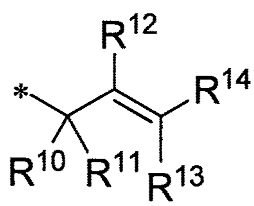

(4)

where $R^{10}$, $R^{11}$, $R^{12}$, $R^{13}$, and $R^{14}$ each independently represent a hydrogen atom, a $C_{1-5}$ alkyl group, a $C_{5-10}$ cycloalkyl group, or a $C_{6-12}$ aryl group, and * represents the bonding portion with the aromatic ring.

**8.** The curable resin composition according to claim 7, wherein the polyalkenyl phenol compound (A) and the polyalkenyl phenol compound (C) are included in a total amount of 10 to 200 parts by mass relative to 100 parts by mass of the polymaleimide compound (B).

**9.** The curable resin composition according to claim 7 or 8, wherein the polyalkenyl phenol compound (C) is included in an amount of 5 to 2000 parts by mass relative to 100 parts by mass of the polyalkenyl phenol compound (A).

**10.** The curable resin composition according to any one of claims 1 to 9, wherein the polymaleimide compound (B) is an aromatic polymaleimide compound.

**11.** The curable resin composition according to claim 10, wherein the polymaleimide compound (B) is at least one compound selected from bis(4-maleimidophenyl)methane and 2,2-bis[4-(4-maleimidophenyloxy)phenyl]propane.

**12.** The curable resin composition according to any one of claims 1 to 11, further comprising a curing accelerator (D) in an amount of 0.01 to 10 parts by mass relative to a total of 100 parts by mass of the polyalkenyl phenol compound (A), the polymaleimide compound (B), and the polyalkenyl phenol compound (C) (when present).

**13.** The curable resin composition according to any one of claims 1 to 12, further comprising a filler (E).

**14.** A cured product of the curable resin composition according to any one of claims 1 to 13.

**15.** A structure comprising a cured product of the curable resin composition according to any one of claims 1 to 13.

**INTERNATIONAL SEARCH REPORT**

International application No. PCT/JP2018/014458

A. CLASSIFICATION OF SUBJECT MATTER
Int.Cl. C08F212/34(2006.01)i, C08F222/40(2006.01)i, C08L61/06(2006.01)i

According to International Patent Classification (IPC) or to both national classification and IPC

B. FIELDS SEARCHED

Minimum documentation searched (classification system followed by classification symbols)
Int.Cl. C08F212, C08F222, C08L61

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | CN 103360764 A (SUZHOU SHENGYI SCI. TECH. CO., LTD.) 23 October 2013, claims, examples (Family: none) | 1-6, 8-15 |
| X | JP 6-93047 A (TOA-GOSEI CHEMICAL INDUSTRY CO., LTD.) 05 April 1994, claims, paragraphs [0009], [0017], examples (Family: none) | 1, 4-15 |
| A | JP 2015-117375 A (MEIWA PLASTIC INDUSTRIES, LTD.) 25 June 2015, claims (Family: none) | 1-15 |
| A | WO 2016/104195 A1 (SHOWA DENKO KABUSHIKI KAISHA) 30 June 2016, claims & US 2017/0349743 A1 (claims) & EP 3239199 A1 & KR 10-2017-0051503 A & CN 107108821 A | 1-15 |
| A | JP 63-99224 A (SANYO KOKUSAKU PULP CO., LTD.) 30 April 1988, claims (Family: none) | 1-15 |
| A | JP 2014-169428 A (NIPPON KAYAKU CO., LTD.) 18 September 2014, claims, example 6 (Family: none) | 1-15 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 June 2018 (18.06.2018) | 10 July 2018 (10.07.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016074902 A
- JP 7165825 A
- JP 2091113 A
- JP 2011026253 A
- JP 2016028129 A